# EUROPÄISCHE PATENTSCHRIFT

(11) **EP 1 686 297 B1**
(45) Veröffentlichungstag und Bekanntmachung des Hinweises auf die Patenterteilung: **03.09.2008**
(21) Anmeldenummer: 06100478.4
(22) Anmeldetag: 17.01.2006
(51) Int. Cl.: F16J 15/32, F16H 57/02

(54) **Dichtelement und Antriebseinheit beinhaltend ein Dichtelement**
Sealing element and drive unit having such a sealing element
Elément de joint d'étanchéité et unité d'entraînement contenant un tel joint

(30) Priorität: 31.01.2005 DE 102005004323
(43) Veröffentlichungstag der Anmeldung: 02.08.2006
(73) Patentinhaber: ROBERT BOSCH GMBH, 70442 Stuttgart (DE)
(72) Erfinder: Meyer, Christian, 76228, Karlsruhe-Wolfartsweier (DE)

(56) Entgegenhaltungen:
- EP-A- 0 596 196
- DE-A1- 4 216 568
- DE-A1-5102004 030 47
- US-A- 4 015 883
- US-A- 4 327 924
- US-A- 4 586 718

## Beschreibung

### Stand der Technik

Die Erfindung betrifft ein Dichtelement, sowie eine Antriebseinheit beinhaltend ein Dichtelement mit einem Radialwellendichtring nach der Gattung der unabhängigen Ansprüche.

Mit der US 4,015,883 ist ein Dichtelement bekannt geworden, das zwischen einem äußeren und einem inneren Ring eines Kugellagers angeordnet ist, um die Wälzkörper des Lagers gegen die Umgebung abzudichten. Das Dichtelement ist als Radialwellendichtring ausgebildet, der sich mit einer äußeren radialen Dichtfläche am äußeren Lagerring abstützt, und mit einer gegenüberliegenden inneren radialen Dichtungslippe am Lager-Innenteil, beispielsweise einer drehbaren Welle, anliegt. Zur Versteifung weist das Dichtelement einen Stützring auf, der innerhalb des Dichtmaterials angeordnet ist. Des weiteren weist das Dichtelement einen Federring auf, der die innere Dichtlippe radial gegen den inneren Lagerring presst. Ein solches Dichtelement eignet sich zur radialen Abdichtung zwei gegeneinander verdrehbarer Zylindermantelflächen. Jedoch kann mit einem solchen Dichtelement keine axiale Dichtung zwischen zwei axial benachbart angeordneten Bauteilen erzielt werden.

EP 0 596 196 A2 und DE 10 2004 030 475 A1 offenbaren andere gattungsgemäße Dichtelemente.

### Vorteile der Erfindung

Das erfmdungsgemäße Dichtungselement, sowie eine ein solches Dichtelement aufweisende Antriebseinheit, mit den Merkmalen des unabhängigen Anspruchs haben den Vorteil, dass aufgrund der Anformung eines Axialdichtrings an den Radialwellendichtring mittels eines einzigen Dichtelements gleichzeitig eine radiale dynamische und eine axiale statische Abdichtung erzielt werden kann. Dadurch entfällt die Verwendung mehrerer separater Dichtringe, sowie die Montageschritte für die Anordnung der jeweiligen Dichtelemente. Daher werden durch die Reduzierung der Anzahl der Bauteile sowohl die Werkzeugkosten für die Herstellung derselben, als auch deren Montagekosten eingespart.

Entsprechend der konkreten Ausformung und Anwendung der beiden axial benachbarten Bauteile weist der Axialdichtring ein kreisförmiges oder ovales, Profil auf, das jeweils über den Steg an den Radialwellendichtring angebunden ist. Dadurch ist der Axialdichtring als einfacher O-Ring ausgebildet, dessen Querschnitt entsprechend der Bauteilgeometrie modifiziert wird.

Durch die in den Unteransprüchen ausgeführten Merkmale sind vorteilhafte Weiterbildungen der Vorrichtungen nach den unabhängigen Ansprüchen möglich. Besonders einfach kann das axial dichtende Ringelement mit einem umlaufenden Steg an den Radialwellendichtring angeformt werden, da dadurch der Axialdichtring zuverlässig und exakt zentriert gegenüber dem Radialwellendichtring fixiert ist. Ein solcher Verbindungssteg lässt sich auch prozesstechnisch einfach als Bestandteil eines einteiligen Dichtkörpers ausbilden.

Weist der Axialdichtring einen größeren Durchmesser auf, als der Außendurchmesser des Radialwellendichtrings, kann mit diesem Dichtelement zusätzlich zur dynamischen radialen Abdichtung eines inneren drehbaren Körpers gegenüber einem äußeren Bauteil, dieses auch gleichzeitig zuverlässig axial gegen ein weiteres axial benachbartes Bauteil abgedichtet werden. Dabei wird die radiale Dichtwirkung des Radialwellendichtrings durch die axiale Anpresskraft des weiteren Bauteils nicht, oder nur unwesentlich, beeinflusst.

In einer bevorzugten Ausführung kann der Axialdichtring einstückig mit der Ummantelung des Radialwellendichtrings ausgebildet sein.

In einer weiteren Ausführung sind an dem axialen Dichtring eine oder mehrere Dichtbarrieren angeformt, die die beiden axial angeordneten Flanschbauteile zuverlässig gegen die Umgebung abdichtet.

Von Vorteil ist es, im Inneren des Radialwellendichtrings einen Stützkörper anzuordnen, der vorzugsweise als topfförmiger Versteifungsring ausgebildet ist, weil dadurch die Formstabilität - und damit die Anlage - des Wellendichtrings an den abzudichtenden Flächen verbessert wird.

Das Dichtelement kann kein besonders günstig als Spritzgussteil hergestellt werden, bei dem der äußere axial dichtende Ring einstückig mit dem Dichtkörper ausgebildet ist, der die äußere radiale Dichtfläche des Radialdichtrings bildet. Besonders vorteilhaft ist es, wenn der Versteifungsring als Einlegeteil mit einer einzigen elastischen Ummantelung umspritzt wird, die gleichzeitig den Axialdichtring bildet.

Damit die innere Dichtlippe zuverlässig an den Drehkörper angepresst werden kann, ist innerhalb des Radialwellendichtrings ein Federring angeordnet, der sich zusammenzieht, wodurch eine federunterstützte Dichtlippe geschaffen wird. Diese Feder kann vor der Montage des Dichtelements innerhalb des Dichtkörpers eingelegt werden, so dass das erfindungsgemäße Dichtelement als ein einziges Bauteil montierbar ist.

Um eine zuverlässige Dichtwirkung zu erzielen, ist der Versteifungsring aus Metall, vorzugsweise aus Stahlblech, und der Dichtkörper aus einem HNBR- oder EPDM-Gummi oder Silikon hergestellt.

Die erfindungsgemäße Antriebseinheit hat den Vorteil, dass durch die Verwendung des Dichtelements mit der Kombination der Radialdichtung mit der Axialdichtung die Anzahl der Bauteile und damit der Montageaufwand reduziert wird.

Dabei wird in einem Getriebegehäuse zuverlässig sowohl ein drehbares Abtriebsrad radial abgedichtet, als auch eine axiale Dichtung für die Anbindung an eine kundenspezifische Getriebeschnittstelle geschaffen.

Durch die einteilige Ausbildung des O-Rings, beziehungsweise des Axialdichtrings mit dem Radialdichtring wird mit der Montage des Radialdichtrings in das Gehäuse der Antriebseinheit ebenfalls der Axialdichtring zuverlässig positioniert und fixiert. Damit kann diese Antriebseinheit mit solch einer offenen Getriebeschnittstelle bereits mit komplett montierten Dichtungen an den Kunden geliefert werden, der diese Antriebseinheit ohne weitere Anordnung von axialen Dichtringen direkt an die kundenspezifische Getriebeschnittstelle anbinden kann. Eine solche verliersichere, positionsgenaue Anordnung des O-Rings auf der Anbaufläche der Antriebseinheit stellt einen enormen Vorteil für den Anbau an die kundenspezifische Getriebeschnittstelle dar.

### Zeichnungen

In der Zeichnung sind Ausführungsbeispiele erfindungsgemäßer Vorrichtungen dargestellt und in der nachfolgenden Beschreibung näher erläutert. Es zeigen
- Figur 1: einen Querschnitt durch einen Ausschnitt eines erfindungsgemäßen Dichtelements,
- Figur 2: einen Schnitt durch einen Antriebseinheit mit montiertem Dichtelement und
- Figur 3: ein weiteres Ausführungsbeispiel eines Dichtelements, das nicht zu der Erfindung gehört.

### Beschreibung der Ausführungsbeispiele

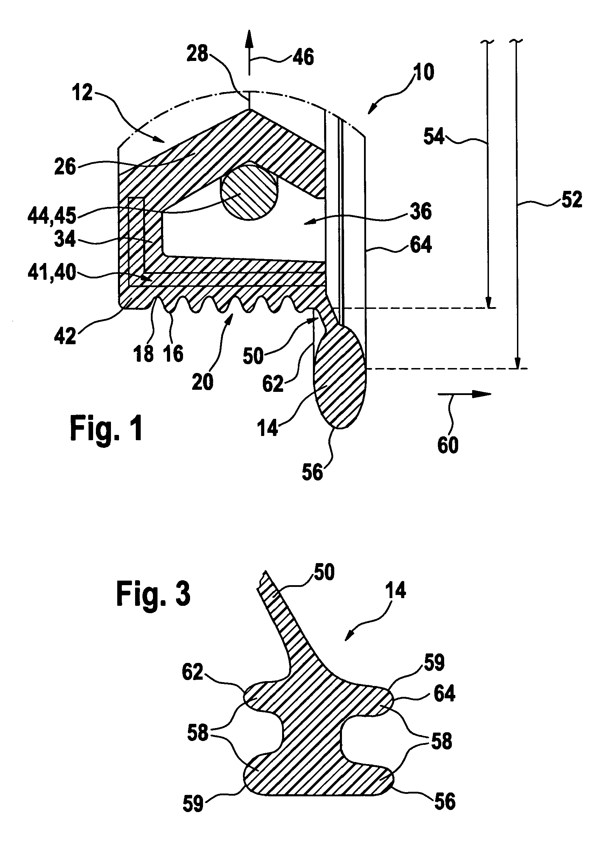

In Figur 1 ist ein Dichtelement 10 dargestellt, das einen Radialwellendichtring 12 aufweist, der mit einem Axialdichtring 14 verbunden ist. Der Radialwellendichtring 12 weist eine radiale Dichtfläche 16 auf, die im Ausführungsbeispiel eine als Rillm 18 ausgebildete Strukturierung 20 aufweist. Diese Strukturierung 20 dient zum Ausgleich von Druckspitzen und zur besseren Haftung an einem radial abzudichtenden äußeren Bauteil 22. Gegenüberliegend zur äußeren Dichtfläche 16 ist an dem Radialwellendichtring 12 eine Dichtlippe 26 angeformt die eine Dichtkante 28 zur radialen Anlage an einem inneren Bauteil 30 aufweist. Die innere Dichtlippe 26 ist über einen in radialer Richtung verlaufenden Verbindungsbereich 34 mit der äußeren Dichtfläche 16 verbunden, so dass der Radialwellendichtring 12 ein im Wesentlichen U-förmiges Profil 36 aufweist. Das Dichtelement 10 im Ausführungsbeispiel ist mittels eines Spritzgussverfahren hergestellt, bei dem ein metallischer Stützring 40 als Einlegeteil mit einer Ummantelung 42 aus elastischem Material umspritzt ist. Der Stützring 40 ist beispielsweise als topfförmiger Stahlring 41 ausgebildet, der dafür sorgt, dass die äußere Dichtfläche 16 und die Dichtlippe 26 exakt gegeneinander positioniert bleiben. Um den Anpressdruck der Dichtkante 28 gegen das innere Bauteil 30 zu erhöhen, weist das Dichtelement 10 ein ringförmiges Federelement 44 auf, das beispielsweise als Spiralfeder 45 ausgebildet ist, die die Dichtlippe 26 umschließt und eine radial nach innen gerichtete Anpresskraft 46 der Dichtlippe 26 erzeugt.

An dem Radialwellendichtring 12 ist über einen umlaufenden Steg 50 der Axialdichtring 14 angeformt. Im Ausführungsbeispiel ist der Axialdichtring 14 einstückig mit der Ummantelung 42 des Radialwellendichtrings 12 ausgebildet. Dadurch kann die U-förmige Radialwellendichtung 12 zusammen mit dem Axialdichtring 14 als ein Spritzgussteil in einem einzigen Arbeitsprozess in einem einzigen Spritzgusswerkzeug hergestellt werden. Das ringförmige Federelement 44 wird dann danach in das U-Profil 36 des Radialwellendichtrings 12 eingelegt. Als Ummantelung 42 für den Radialwellendichtring 12 und für den Axialdichtring 14 wird als technischer Gummiwerkstoff vorzugsweise ein NBR- oder EPDM-Weichgummi oder ein anderes Elastomer verwendet. Der umlaufende Steg 50 hat zumindest eine radiale Komponente, so dass der Axialdichtring 14 mit einem mittleren Durchmesser 52 radial außerhalb des Außendurchmessers 54 der äußeren Dichtfläche 16 angeordnet ist. Der Axialdichtring 14 weist einen Querschnitt 56 auf, der im Ausführungsbeispiel oval ausgebildet ist, in Variationen aber auch kreisförmig ausgebildet sein kann.

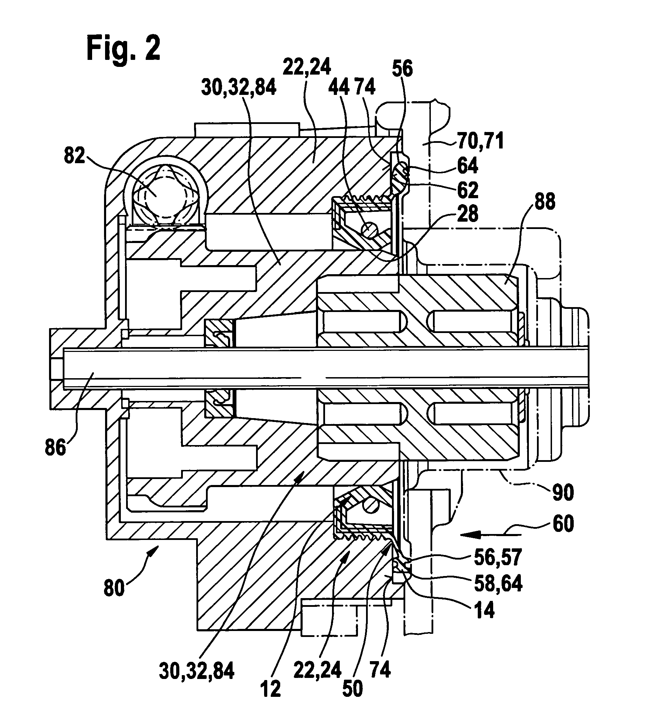

In einem nicht erfindungsgemäßen Ausführungsbeispiel, wie in Figur 2 dargestellt, weist der Grundkörper des Radialdichtrings 14 einen rechteckigen Querschnitt 57 auf, an den eine oder mehrere Dichtbarrieren 58 angeformt sind. Die Dichtbarrieren 58 erstrecken sich in axialer Richtung 60 und erhöhen aufgrund der kleinen Anlagefläche den Anpressdruck der Axialdichtung. Der Axialdichtring 14 weist eine erste und eine zweite axiale Dichtfläche 62, 64 auf, die zur Anlage einerseits an dem äußeren Bauteil 22 und andererseits an einem weiteren axial angeordneten Bauteil 70 dienen.

Das Dichtelement 10 in Figur 2 mit unterschiedlich gezeichneten Querschnitten 56, 57 des Axialdichtrings 14 ist in eine Antriebseinheit 80 eingebaut. Dabei ist das äußere Bauteil 22 als drehfestes Gehäuse 24 ausgebildet. Das innere Bauteil 30 ist hierbei ein Rotationskörper 32, der auf einer feststehenden Welle 86 gelagert ist. Der Rotationskörper 32 ist als Schneckenrad 84 ausgebildet, das von einer Schnecke 82 angetrieben wird, die mit einem nicht näher dargestellten Elektromotor verbunden ist. Das weitere axiale Bauteil 70 ist als kundenspezifisches Getriebebauteil 71 ausgebildet, das über eine Anbaufläche 74 des Gehäuses 24 mit der Antriebseinheit 80 verbunden werden kann, wobei das Antriebsmoment vom Schneckenrad 84 über ein Abtriebsritzel 88 auf das kundenspezifische Getriebebauteil 71 übertragen wird. Das Dichtelement 10 dichtet nun mit dem Radialwellendichtring 12 das Gehäuse 24 dynamisch gegen den Rotationskörper 32 ab, so dass die Antriebseinheit 80 auch ohne kundenspezifisches Getriebebauteil 71 nach außen bezüglich Öl und Schmutz abgedichtet ist. Da der Axialdichtring 14 über den Steg 50 mit dem Radialwellendichtring 12 verbunden ist, ist nach der Montage des Dichtelements 10 der Axialdichtring 14 an der Anbaufläche 74 des Bauteils 22, 24 zentriert und fixiert. Dadurch kann das kundenspezifische Getriebebauteil 71 ohne Montage weiterer Dichtungen axial an die Antriebseinheit 80 angeflanscht werden, wobei der Axialdichtring 14 in seiner ersten und zweiten axialen Dichtfläche 62, 64 einerseits am äußeren Bauteil 22, 24 und andererseits an dem weiteren axialen Bauteil 70, 71 anliegt. Dabei bildet der Axialdichtring 14 mit dem Radialwellendichtring 12 ein einziges Dichtelement 10, wobei gegebenenfalls das ringförmige Federelement 44 in den Radialwellendichtring 12 eingefügt ist. Bei der Montage des kundenspezifischen Getriebebauteils 71 an die Antriebseinheit 80 kommt das Ritzel 88 in Eingriff mit einem korrespondierenden Hohlzahnrad 90 des Getriebebauteils 71. Durch die radiale Montagekraft wird der Axialdichtring 14 zwischen den Bauteilen 22 und 70 verformt, so dass das Ritzel 88 gegenüber der Umgebung abgedichtet ist.

In Figur 3 ist eine weitere nicht erfindungsgemäße, Variation eines Querschnitts 56 des Axialdichtrings 14 dargestellt. An beiden axialen Seiten sind zwei Dichtbarrieren 58 angeformt, die als erste und zweite Dichtfläche 62, 64 dienen. Die Dichtbarrieren 58 weisen eine Wölbung 59 auf, die bei der Montage zwischen den Bauteilen 22 und 70 an die Anbaufläche 74 und das kundenspezifische Bauteil 71 angepresst werden. Bei dieser Ausführung ist der Axialdichtring 14 ebenfalls als ein gemeinsames Teil mit der Ummantelung 42 des Radialdichtrings 12 ausgeführt.

Es sei angemerkt, dass hinsichtlich der in den Figuren gezeigten Ausführungsbeispiele vielfältige Kombinationsmöglichkeiten der einzelnen Merkmale untereinander in Rahmen des durch die Ansprüche definierten Schutzumfangs möglich sind. So kann beispielsweise die konkrete Ausgestaltung des Radialwellendichtrings 12 und des Axialdichtrings 14 der entsprechenden Anwendung angepasst werden. So sind dem Fachmann verschiedenen Ausführungen von Radialdichtringen 12 bekannt: mit oder ohne Ringfeder 44, mit oder ohne Stützring 40, bezüglich seiner Druckbelastung einseitig oder zweiseitig wirkend. Ebenso kann die konkrete Ausformung der Dichtlippe 26 mit der Dichtkante 28 und die äußere Dichtfläche 16 mit der Strukturierung 20 beliebig ausgeführt sein. Entscheidend für die Erfindung ist, dass der Axialdichtring 14 mit dem Radialwellendichtring 12 verbunden ist, so dass gleichzeitig zur dynamischen Radialdichtung eine Axialdichtung für ein weiteres Bauteil 70 bereitgestellt wird. Die konkrete Ausgestaltung und Herstellung des Stegs 50 kann ebenfalls variieren , beispielsweise muss der Steg 50 nicht vollständig umlaufend ausgebildet sein. Die Länge, Dicke und Ausrichtung des Stegs 50 hängt ebenfalls von der genauen Dichtgeometrie der abzudichtenden Bauteile 20, 30, 70 ab und kann entsprechend angepasst werden. Der Axialdichtring 14 ist als vollständig umlaufender O-Ring ausgebildet, wobei dessen Querschnitt kreisförmig oder oval ausgebildet ist . Bevorzugt wird das erfindungsgemäße Dichtelement 10 in der elektromotorischen Getriebe-Antriebseinheit 80 eingesetzt, die eine Getriebeschnittstelle zu einem kundenspezifischen Getriebebauteil 71 aufweist. Beispielsweise findet einen solche Antriebseinheit 80 Anwendung in Kraftfahrzeug, zum Verstellen beweglicher Teile, insbesondere für ein automatisches Schaltgetriebe oder ein Differenzialgetriebe.

## Patentansprüche

1. Dichtelement (10) zum Abdichten einer Antriebseinheit (80), mit einem Radialwellendichtring (12), der eine radiale Dichtfläche (16) zur Abdichtung gegen ein erstes Bauteil (22, 24) und eine gegenüberliegende radiale Dichtungslippe (26) zur Abdichtung gegenüber einem weiteren drehbaren Bauteil (30, 32, 84) aufweist, **wobei** an dem Radialwellendichtring (12) ein Axialdichtring (14) zur axialen Abdichtung eines dritten Bauteils (70, 71) angeformt ist, **dadurch gekennzeichnet, dass** der Axialdichtring (14) einen Querschnitt (56) aufweist, der kreisförmig oder oval ausgebildet ist.

2. Dichtelement (10) nach Anspruch 1, **dadurch gekennzeichnet, dass** der Axialdichtring (14) mittels eines umlaufenden Stegs (50) mit dem Radialwellendichtring (12) verbunden ist.

3. Dichtelement (10) nach Anspruch 1 oder 2, **dadurch gekennzeichnet, dass** die radiale Dichtfläche (16) am äußeren Umfang des Radialwellendichtrings (12) angeordnet ist, und der Axialdichtring (14) radial außerhalb der äußeren Dichtfläche (16) angeordnet ist.

4. Dichtelement (10) nach einem der vorhergehenden Ansprüche, **dadurch gekennzeichnet, dass** der Axialdichtring (14) einstückig mit der Ummantelung (42) des Radialwellendichtrings (12) ausgebildet.

5. Dichtelement (10) nach einem der vorhergehenden Ansprüche, **dadurch gekennzeichnet, dass** der Axialdichtring (14) mindestens eine umlaufende Dichtungsbarriere (58) aufweist.

6. Dichtelement (10) nach einem der vorhergehenden Ansprüche, **dadurch gekennzeichnet, dass** der Radialwellendichtring (12) einen von einer elastischen Ummantelung (42) im wesentlichen umhüllten Versteifungsring (40, 41) aufweist, der insbesondere topfförmig ausgebildet ist.

7. Dichtelement (10) nach einem der vorhergehenden Ansprüche, **dadurch gekennzeichnet, dass** die Ummantelung (42) und der Axialdichtring (14) als gemeinsames Spritzgussteil ausgebildet sind.

8. Dichtelement (10) nach einem der vorhergehenden Ansprüche, **dadurch gekennzeichnet, dass** zwischen der inneren Dichtungslippe (26) und der äußeren Dichtfläche (26) ein ringförmiges Federelement (44, 45) angeordnet ist, mittels dessen die innere Dichtungslippe (26) gegen das drehbare Bauteil (30, 32, 84) anpressbar ist.

9. Dichtelement (10) nach einem der vorhergehenden Ansprüche, **dadurch gekennzeichnet, dass** die Gummiummantelung (42) aus Elastomer, insbesondere EPDM, und der Versteifungsring (40, 41) aus Metall gefertigt ist.

10. Antriebseinheit (80), insbesondere ein elektrischer Getriebemotor (80), mit einem Gehäuse (22, 24) und ein darin angeordnetes, antreibbares Abtriebsrad (30, 32, 84) und einer (sich quer zur Achsrichtung erstreckenden) Anbaufläche (74) für ein kundenspezifisches Getriebebauteil (70, 71), das mittels des Abtriebrads (30, 32, 84) antreibbar ist, **dadurch gekennzeichnet, dass** in der Antriebseinheit (80) ein Dichtelement (10) nach einem der vorhergehenden Ansprüche angeordnet ist.

11. Antriebseinheit (80) nach Anspruch 10, **dadurch gekennzeichnet, dass** das Dichtelement (10) einerseits das Gehäuse (22, 24) radial gegenüber dem drehbaren Abtriebsrad (30, 32, 84) abdichtet und gleichzeitig einen axialen Dichtring (14) für den Anbau des kundenspezifischen Getriebebauteils (70, 71) zur Verfügung stellt.

12. Antriebseinheit (80) nach einem der Ansprüche 10 oder 11, **dadurch gekennzeichnet, dass** das Dichtelement (10) zwischen dem Gehäuse (22, 24) und dem Abtriebsrad (30, 32, 84) derart einpressbar ist, dass der Axialdichtring (14) auf der Anbaufläche (74) exakt gegenüber einer Anbauposition des kundespezifischen Getriebebauteils (70, 71) positioniert, beziehungsweise zentriert ist.

## Claims

1. Sealing element (10) for sealing a drive unit (80), with a radial shaft sealing ring (12) which has a radial sealing surface (16) for sealing against a first component (22, 24), and an opposite radial sealing lip (26) for sealing in relation to a further rotatable component (30, 32, 84), wherein an axial sealing ring (14) for the axial sealing of a third component (70, 71) is integrally formed on the radial shaft sealing ring (12), **characterized in that** the axial sealing ring (14) has a cross section (56) which is of circular or oval design.

2. Sealing element (10) according to Claim 1, **characterized in that** the axial sealing ring (14) is connected to the radial shaft sealing ring (12) by means of an encircling web (50).

3. Sealing element (10) according to Claim 1 or 2, **characterized in that** the radial sealing surface (16) is arranged on the outer circumference of the radial shaft sealing ring (12), and the axial sealing ring (14) is arranged radially outside the outer sealing surface (16).

4. Sealing element (10) according to one of the preceding claims, **characterized in that** the axial sealing ring (14) is formed integrally with the casing (42) of the radial shaft sealing ring (12).

5. Sealing element (10) according to one of the preceding claims, **characterized in that** the axial sealing ring (14) has at least one encircling sealing barrier (58).

6. Sealing element (10) according to one of the preceding claims, **characterized in that** the radial shaft sealing ring (12) has a stiffening ring (40, 41) which is substantially encased by an elastic casing (42) and, in particular, is of cup-shaped design.

7. Sealing element (10) according to one of the preceding claims, **characterized in that** the casing (42) and the axial sealing ring (14) are designed as a common injection-moulded part.

8. Sealing element (10) according to one of the preceding claims, **characterized in that** an annular spring element (44, 45) is arranged between the inner sealing lip (26) and the outer sealing surface (26) and can be used to press the inner sealing lip (26) against the rotatable component (30, 32, 84).

9. Sealing element (10) according to one of the preceding claims, **characterized in that** the rubber casing (42) is manufactured from elastomer, in particular EPDM, and the stiffening ring (40, 41) is manufactured from metal.

10. Drive unit (80), in particular an electric gear motor (80), with a housing (22, 24) and a drivable output wheel (30, 32, 84) arranged therein, and an add-on surface (74) (which extends transversely with respect to the axial direction) for a customer-specific gear component (70, 71) which can be driven by means of the output wheel (30, 32, 84), **characterized in that** a sealing element (10) according to one of the preceding claims is arranged in the drive unit (80).

11. Drive unit (80) according to Claim 10, **characterized in that** the sealing element (10) seals the housing (22, 24) radially in relation to the rotatable output wheel (30, 32, 84) and at the same time provides an axial sealing ring (14) for the adding-on of the customer-specific gear component (70, 71).

12. Drive unit (80) according to either of Claims 10 and 11, **characterized in that** the sealing element (10) can be pressed between the housing (22, 24) and the output wheel (30, 32, 84) in such a manner that the axial sealing ring (14) is positioned or centred on the add-on surface (74) exactly in relation to an add-on position of the customer-specific gear component (70, 71).

## Revendications

1. Elément de joint d'étanchéité (10) pour réaliser l'étanchéité d'une unité d'entraînement (80) comportant un joint d'étanchéité, radiale d'arbre (12), ayant une surface d'étanchéité radiale (16) pour assurer l'étanchéité par rapport à une première pièce (22, 24), et une lèvre d'étanchéité (26), radiale, opposée, pour assurer l'étanchéité par rapport à une autre pièce rotative (30, 32, 84),
le joint d'étanchéité radiale d'arbre (12) ayant un joint d'étanchéité axiale (14) pour réaliser l'étanchéité axiale d'une troisième pièce (70, 71),
**caractérisé en ce que**
le joint d'étanchéité axiale (14) a une section (56) de forme circulaire ou ovale.

2. Elément d'étanchéité (10) selon la revendication 1,
**caractérisé en ce que**
le joint d'étanchéité axiale (14) est relié au joint d'étanchéité radiale d'arbre (12) par l'intermédiaire d'une branche périphérique (50).

3. Elément d'étanchéité (10) selon la revendication 1 ou 2,
**caractérisé en ce que**
la surface d'étanchéité radiale (16) est prévue à la périphérie extérieure du joint d'étanchéité radiale d'arbre (12), et le joint d'étanchéité axiale (14) est situé radialement à l'extérieur de la surface d'étanchéité extérieure (16).

4. Elément d'étanchéité (10) selon les revendications précédentes,
**caractérisé en ce que**
le joint d'étanchéité axiale (14) est réalisé en une seule pièce avec l'enveloppe (42) du joint d'étanchéité radiale d'arbre (12).

5. Elément d'étanchéité (10) selon les revendications précédentes,
**caractérisé en ce que**
le joint d'étanchéité axiale (14) comporte au moins une barrière d'étanchéité (58) périphérique.

6. Elément d'étanchéité (10) selon les revendications précédentes,
**caractérisé en ce que**
le joint d'étanchéité radiale d'arbre (12) comporte un anneau de rigidification (40, 41) entouré pratiquement par une enveloppe élastique (42), cet anneau ayant notamment une forme de pot.

7. Elément d'étanchéité (10) selon les revendications précédentes,
**caractérisé en ce que**
l'enveloppe (42) et le joint d'étanchéité axiale (14) sont réalisés sous la forme d'une même pièce injectée.

8. Elément d'étanchéité (10) selon les revendications précédentes,
**caractérisé par**
un élément de ressort (44, 45), de forme annulaire entre la lèvre d'étanchéité intérieure (26) et la surface d'étanchéité extérieure (16), l'élément de ressort qui pousse la lèvre d'étanchéité intérieure (26) contre la pièce rotative (30, 32, 84).

9. Elément d'étanchéité (10) selon les revendications précédentes,
**caractérisé en ce que**
l'enveloppe en caoutchouc (42) est en élastomère notamment en caoutchouc EPDM, et l'anneau de rigidification (40, 41) est en métal.

10. Unité d'entraînement (80) notamment moto réducteur électrique (80) ayant un boîtier (22, 24) logeant une roue de sortie (30, 32, 34), entraînée et une surface de montage (74), (s'étendant transversalement à la direction de l'axe) pour une pièce de transmission (70, 71) spécifique au client, et qui est entraînée par la roue de sortie (30, 32, 84),
**caractérisée en ce que**
l'unité d'entraînement (80) comporte un élément d'étanchéité (10) selon l'une des revendications précédentes.

11. Unité d'entraînement (80) selon la revendication 10,
**caractérisée en ce que**
l'élément d'étanchéité assure d'une part l'étanchéité du boîtier (22, 24) radialement par rapport à la roue de sortie (30, 32, 84) rotative et constitue en même temps un joint d'étanchéité axiale (14) pour le montage de la pièce de transmission (70, 71) spécifique au client.

12. Unité d'entraînement (80) selon la revendication 10 ou 11,
**caractérisée en ce que**
l'élément d'étanchéité (10) est pressé entre le boîtier (22, 24) et la roue de sortie (30, 32, 84) de façon que le joint d'étanchéité axiale (14) soit positionné et notamment centré exactement contre la surface de montage (74) par rapport à la position de montage de la pièce de transmission (70, 71) spécifique au client.
